(19) Europäisches Patentamt

European Patent Office

Office européen des brevets

(11) **EP 0 998 058 B1**

(12) **EUROPÄISCHE PATENTSCHRIFT**

(45) Veröffentlichungstag und Bekanntmachung des Hinweises auf die Patenterteilung:
**17.12.2003 Patentblatt 2003/51**

(51) Int Cl.7: **H04B 7/08**

(21) Anmeldenummer: **99119878.9**

(22) Anmeldetag: **07.10.1999**

(54) **Scanning-Antennen-Diversity-System für Fahrzeuge**

Scanning antenna diversity system for vehicles

Système de selection d'antennes à balayage pour véhicules

(84) Benannte Vertragsstaaten:
**AT BE CH DE DK ES FI FR GB GR IE IT LI LU MC NL PT SE**

(30) Priorität: **18.10.1998 DE 19847887**

(43) Veröffentlichungstag der Anmeldung:
**03.05.2000 Patentblatt 2000/18**

(73) Patentinhaber: **FUBA Automotive GmbH & Co. KG 31162 Bad Salzdetfurth (DE)**

(72) Erfinder:
• **Lindenmeier, Heinz**
  **82152 Planegg (DE)**
• **Hopf, Jochen**
  **85540 Haar (DE)**
• **Reiter, Leopold**
  **82205 Gilching (DE)**

(56) Entgegenhaltungen:
**EP-A- 0 517 196        DE-A- 4 236 089**
**DE-A- 4 403 612**

**Beschreibung**

Die Erfindung betrifft ein Scanning-Antennen-Diversitysystem für Fahrzeuge mit einer Mehrantennenanlage nach dem Oberbegriff des Anspruchs 1.

Schaltungsanordnungen dieser Art sind bekannt aus der DE 35 17 247. Bei der dort beschriebenen Antennendiversity-Empfangsanlage zur Elimination von Störungen beim Empfang frequenzmodulierter Rundfunkaussendungen werden einem Diversityprozessor eine Anzahl von Antennensignalen zugeführt, von denen zu jedem Zeitpunkt ein ausgewähltes Antennensignal zum Empfänger durchgeschaltet ist. Aus diesem Signal wird im Empfänger im Zwischenfrequenzbereich (ZF) durch Umsetzung ein Signal abgeleitet, welches dem Diversityprozessor zur Erkennung von Störungen zugeführt ist. Bei Erkennung einer Störung werden im Diversityprozessor Schaltsignale zum Umschalten auf ein weiteres Antennensignal abgeleitet. Dadurch werden durch Mehrwegeempfang bedingte audiofrequente Störungen dann weitgehend vermieden, wenn ausreichende Empfangsverhältnisse vorliegen. In Gebieten mit schlechten Empfangsverhältnissen kommt es jedoch mit Schaltungsanordnungen nach DE 35 17 247 zu häufigen Umschaltvorgängen und damit verbundenen, weiterschaltungsbedingten Störungen. Insbesondere in Schwachsignalgebieten und bei guter Wiedergabequalität im Kraftfahrzeug wird die Hörqualität durch diese Umschaltstörungen beeinträchtigt.

Bei frequenzmodulierten Rundfunksignalen (z. B. UKW-Empfang oder Fernsehtonempfang) ergibt sich eine Empfangsstörung bei einer aktuell aufgeschalteten Antenne durch die Überlagerung mehrerer Teilwellen mit unterschiedlichen Amplituden, Phasen- und Laufzeitdifferenzen am Empfangsort. Die dadurch entstehenden Pegeleinbrüche sind mit Frequenzstörhubspitzen korreliert und verursachen Signalverzerrungen in Abhängigkeit vom Modulationsinhalt im Hörfrequenzbereich. Die minimale Prüfzeit entspricht daher der Störerkennungszeit. Erkennt der Störungsdetektor auf Störung, so veranlaßt der Diversity-Prozessor ein Weiterschalten und die weiteren Antennensignale und gegebenenfalls deren in einer Antennenmatrix gebildeten Linearkombinationen werden geprüft. Weisen alle zur Verfügung stehenden HF-Signale Störungen auf, werden ständig sämtliche HF-Signale nacheinander zum Empfänger durchgeschaltet. Da sich dieser Suchprozeß in schneller Folge wiederholt, überlagert sich dem Empfangssignal auf der NF-Ebene ein wahrnehmbares Störsignal in Form eines 'Knisterns'.

In der DE 440 03 612 werden deshalb Maßnahmen vorgenommen, um in besonders ungünstigen Empfangslagen die Weiterschalthäufigkeit zu begrenzen. Dies geschieht dort mit Hilfe einer Stop-Einrichtung, die bei zu häufiger Störungsanzeige durch den Diversityprozessor, angepaßt an die Empfangsbedingungen, die Weiterschaltung unterbindet. Dadurch werden zwar die durch das Umschalten hervorgerufenen Störungen reduziert, naturgemäß wirken sich jedoch die Empfangsstörungen, die der Diversityprozessor anzeigt, im Empfangssignal störend aus.

Aufgabe der Erfindung ist es deshalb, bei einem Scanning-Antennen-Diversitysystem der gattungsgemäßen Art Maßnahmen zu entwickeln, die Weiterschaltungen und in der Folge davon, die damit verbundenen Störungen zu reduzieren.

Diese Aufgabe wird erfindungsgemäß durch die im Kennzeichen des Anspruchs 1 angegebenen Merkmale gelöst.

Besondere Ausführungsarten und weitere Ausgestaltungen der Erfindung sind in den Unteransprüchen angegeben.

Die mit der Erfindung erzielbaren Vorteile bestehen darin, daß unter den vom Diversityprozessor bezüglich der Störfreiheit auszuwählenden Empfangssignale zu jedem Zeitpunkt stets dasjenige Empfangssignal zur Verfügung steht, welches aufgrund der Vorselektion zu jedem Zeitpunkt aus den verfügbaren Empfangssignalen den größten Pegel liefert und demzufolge mit kleinerer Wahrscheinlichkeit Störungen besitzt. Der mit der Erfindung bewirkte Vorteil liegt somit in der Folge davon darin, daß ein Empfangssignal zur Auswahl angeboten wird, dessen Störwahrscheinlichkeit kleiner ist als bei den diskreten Signalen und die Störerkennungsrate des Diversityprozessors 4 nennenswert kleiner ist. Andererseits ist bekannt, daß beim FM-Rundfunk auch bei großen Empfangssignalen extrem starke Störungen auftreten können, wie sie z.B. beim Mehrwegeempfang mit großen Laufzeitunterschieden oder aufgrund von Nachbarkanal-oder Gleichkanalstörungen beobachtet werden. Deshalb ist es notwendig, daß die Auswahl nach minimaler Störung Priorität behält und der Diversityprozessor auch das Maximal-Pegelsignal auf Störfreiheit prüft und ggfs. zu einem diskret vorliegenden Signal weiterschaltet.

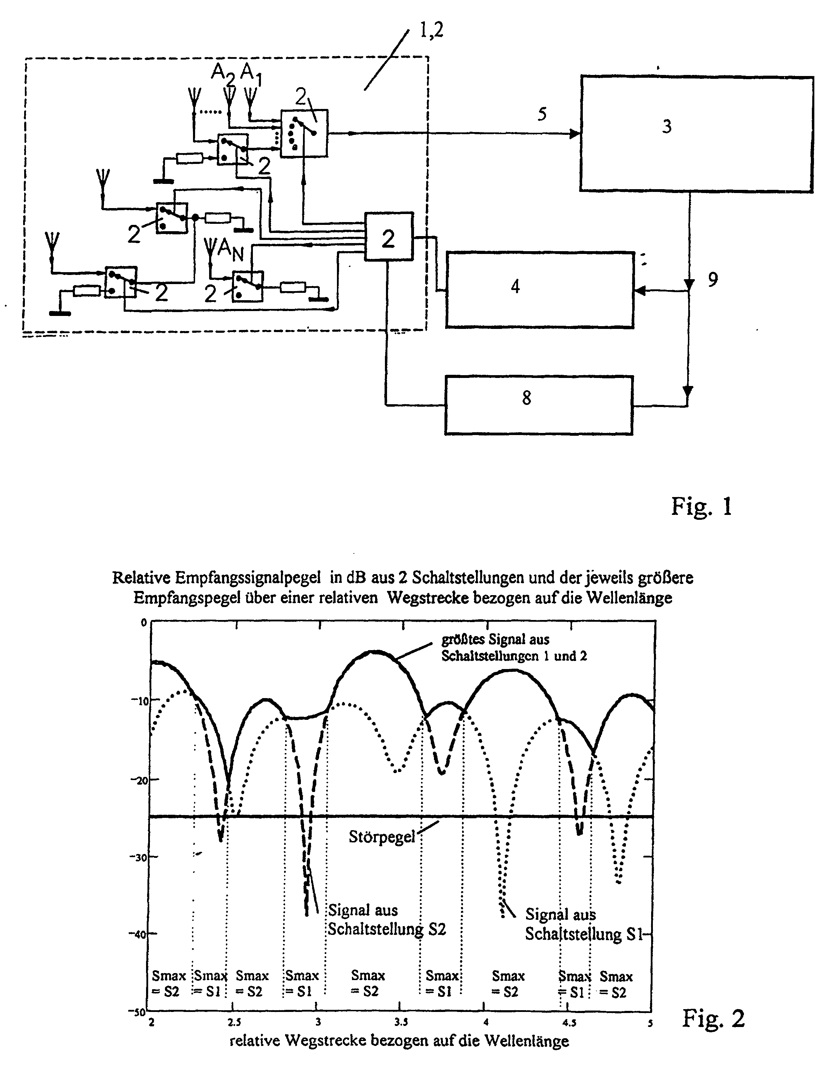

Ausführungsbeispiele der Erfindung sind in den Fig. 1 bis 7 dargestellt. Es zeigen:

Fig. 1 Erfindungsgemäßes Scanning-Antennen-Diversitysystem mit Mehrantennenanlage (1), Empfänger (3), Diversityprozessor (4) und Pegelvergleichseinrichtung (8) zur laufenden Ermittlung der dem Maximalpegel im abgeleiteten Empfangssignal (9) entsprechenden Maximalpegel-Schaltstellung (Smax), deren Adresse in der logischen Schalteinrichtung (2) abgelegt ist und in der Liste der Adressen enthalten ist und bei der zyklischen Durchschaltung der Empfangssignale (5) zum Empfänger (3) erfaßt ist.

Fig. 2 Verlauf der Empfangspegel aus zwei verschiedenen Schaltstellungen (S1, S2) über die auf die Wellenlänge Lambda bezogene Wegstrecke und das jeweils größte Signal aus den beiden Schaltstellungen bei der Maximalpegel-Schaltstellung (Smax), die durch die Pegelvergleichseinrichtung (8) laufend ermittelt ist.

Fig. 3

a) Scanning-Antennen-Diversitysystem wie in Fig. 1 mit einem Zeitintervallgeber (11) zur Initiierung des Pegelvergleichsvorgangs nach jedem Zeitintervall (7) in der Logikschaltung (13). Diese sendet zum Zwecke des Pegelvergleichs ein Umschaltsignal (12) an die logische Schalteinrichtung (2) und gleichzeitig einen Pegelvergleichspuls (15) an den Pegelkomparator (10) aus. Das Binärsignal (18) gibt die Maximalpegel-Schaltstellung (Smax) an, deren Adresse über das Adressignal (19) in der logischen Schalteinrichtung (2) abgelegt wird.

b) Pegelkomparator (10) mit einem Sample-Zeitgeber (20) zur Ansteuerung des Sample- und Hold-Entscheiders (17) mit möglichst kurzer Sample-Zeit (16) zur Messung.

c) Sample-Pulse für den Fall eines Pegelvergleichs gemäß zweier Schaltstellungen innerhalb der Pegelvergleichszeit (6) von etwa doppelter Länge der Sample-Zeit (16) nach jedem Zeitintervall (7)

d) Sample-Pulse für den Fall eines Pegelvergleichs zweier Schaltstellungen mit jeweils einer Pegelmessung entsprechend einer Schaltstellung während einer Pegelvergleichszeit (6) nach jedem Zeitintervall (7) und Speicherung des gemessenen Pegelwerts im Sample- und Hold-Entscheider (17) und Vergleich der Pegel der in aufeinander folgenden Pegelvergleichszeiten (6) ermittelten Pegelwerte. Die Pegelvergleichszeit (6) entspricht dann etwa der einfachen Meßzeit, also der Sample-Zeit (16).

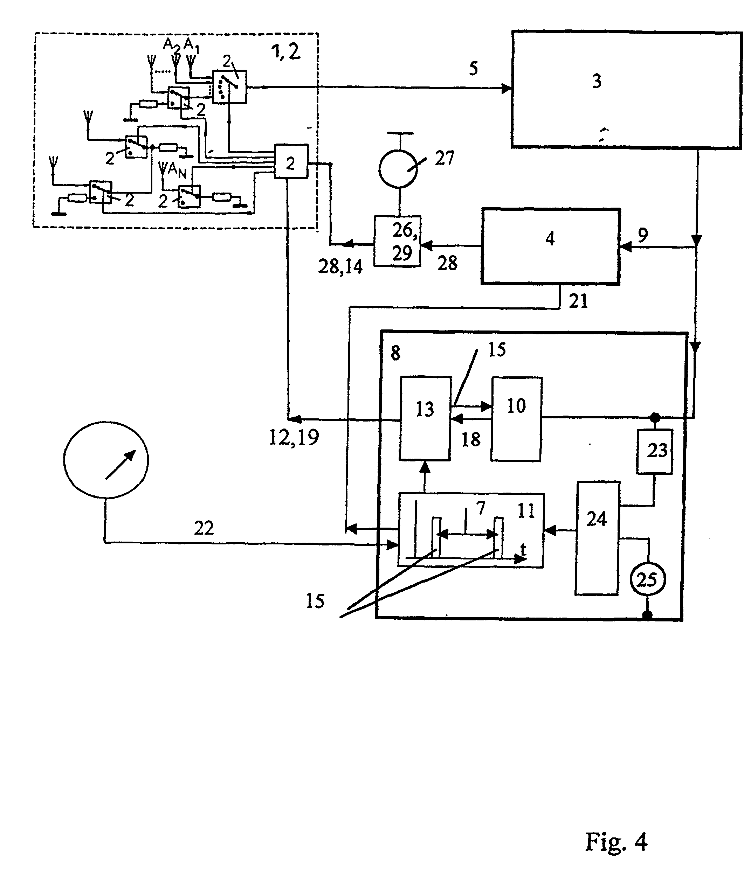

Fig. 4 Scanning-Antennen-Diversitysystem mit verschiedenen Zusatzeinrichtungen:

- sichere Vermeidung eines durch den Pegelvergleichsvorgang verursachten Weiterschaltens durch Anlegen eines Haltesignals an den Halteeingang (21) des Diversityprozessors (4) während der Pegelvergleichszeit (6). Das Haltesignal ist aus den Pegelvergleichspulsen (15) abgeleitet.

- Anpassung des Zeitintervalls (7) an die Fahrgeschwindigkeit mit Hilfe des elektrischen Tachometersignals (22) durch Steuerung des Zeitintervalls (7). .

- Stillegung des Pegelvergleichvorgängs bei Überschreitung eines Grenzpegels (25) durch den im Empfangssignalpegelindikator (23) festgestellten gemittelten Empfangspegel in gut versorgten Empfangsgebieten durch Aussetzung der Pegelvergleichspulse (15) mit Hilfe der Stop-Schaltung (24).

- Begrenzung der Schalthäufigkeit des Diversityprozessors (4) in Gebieten stark gestörter Empfangssignale in allen Schaltstellungen (S1,S2,..Smax) durch eine Abschalteinrichtung (29), welche bei Überschreiten des von einem Pulszähler (26) festgestellten Pulsfrequenzgrenzwerts (27) die Weitergabe der Weiterschaltpulse (28) des Diversityprozessors (4) an die logische Schalteinrichtung (2) verhindert und die Abschalteinrichtung (29) ein Einstellsignal (14) an die logische Schalteinrichtung (2) gibt derart, daß die Maximalpegel-Schaltstellung (Smax) eingestellt ist.

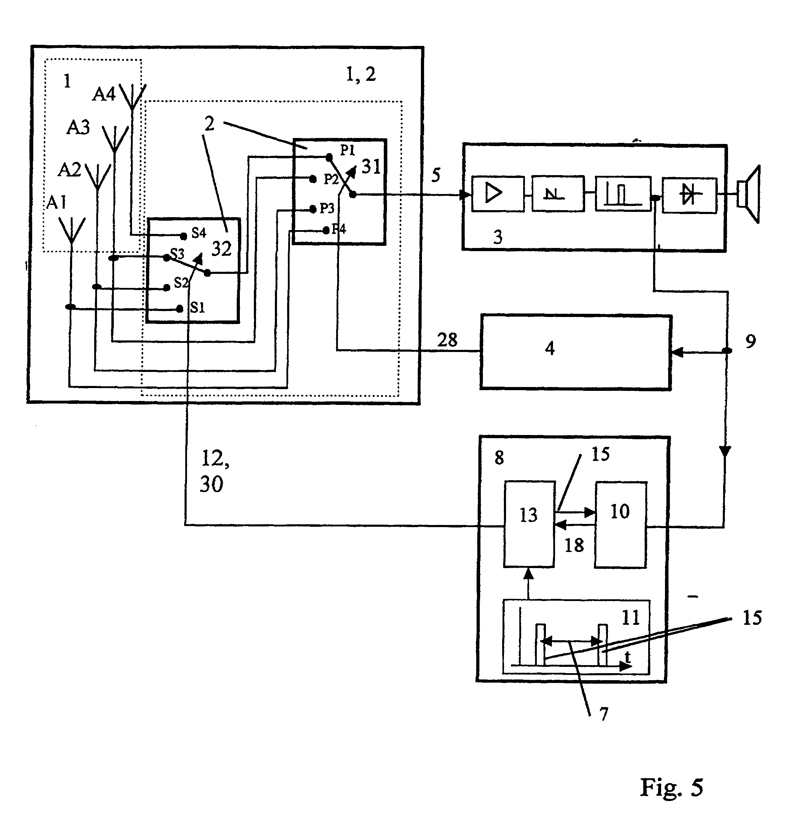

Fig. 5 Beispiel eines Scanning-Antennen-Diversitysystems mit einfacher logischer Schalteinrichtung (2), bestehend aus einem elektronischen Weiterschalter (31) und einem adressierbaren elektronischen Umschalter (30), dessen Eingänge an die Antennen (A1..A4) angeschlossen sind. Während der Pegelvergleichszeit (6) wird die Maximalpegel-Schaltstellung (Smax) (im Beispiel Smax = S3) aus den möglichen Schaltstellungen (S1...S4) ermittelt und jeweils für die Dauer eines Zeitintervalls (7) eingestellt und das Ausgangssignal des elektronischen Umschalters (30) einem der Eingänge (im Beispiel P1) des elektronischen Weiterschalters (31) zugeführt. Den übrigen Eingängen (im Beispiel P2..P4) des elektronischen Weiterschalters (31) werden die diskreten Empfangssignale der Antennen (A1, A2, A3) zugeführt. Der Diversityprozessor (4) schaltet bei Feststellung einer Störung im ZF-Signal des Superhet-Empfängers (3) den elektronischen Weiterschalter (31) um jeweils eine Schaltstellung weiter.

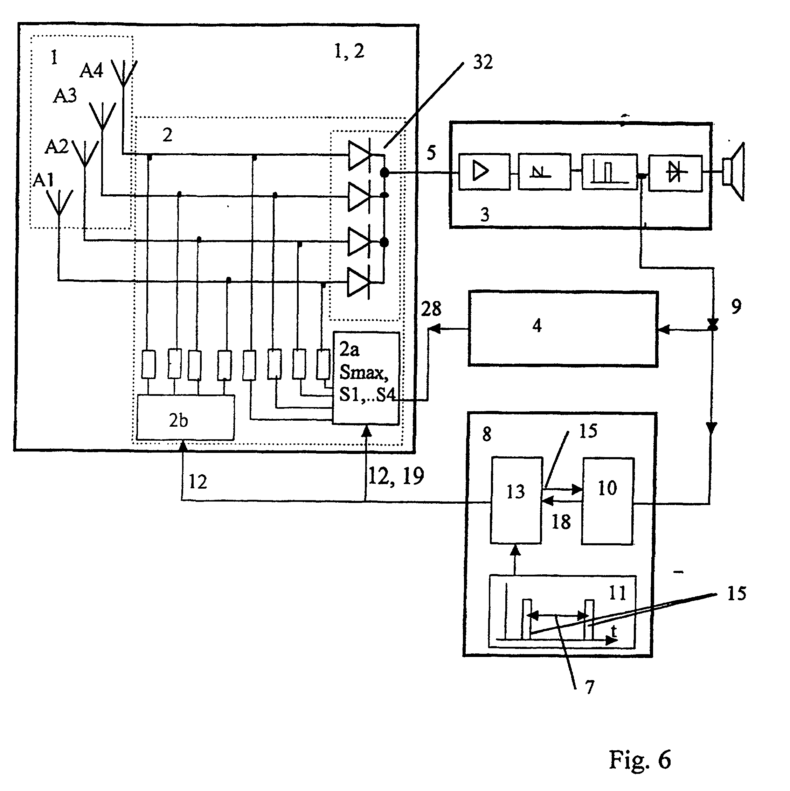

Fig. 6 Beispiel eines Scanning-Antennen-Diversitysystems mit einer aus einem Mehr-Diodenschalter (32), einer Weiterschaltlogik (2a) und einer Umschaltlogik (2b) bestehenden logischen Schalteinrichtung (2). Durch alternatives Aktivieren einer der Dioden durch die Umschaltlogik (2b) durch das Umschaltsignal (12) wird während der Pegelvergleichszeit (6) das Adressignal (19) für die Maximalpegel-Schaltstellung (Smax) ermittelt und in der Weiterschaltlogik (2a) die Adresse der Maximalpegel-Schaltstellung (Smax) durch Steuerung mit dem Adressignal (19) in der dort bestehenden Adressenliste (Smax, S1, S2, S3, S4) aktualisiert abgelegt. Bei Auftreten eines Weiterschaltpulses (28) während eines Zeitintervalls (7) am Ausgang des Diversityprozessors (4) wird die Adressenliste jeweils um eine weitere Position durch Aktivieren der dazugehörigen Diode abgearbeitet. Die Weiterschaltlogik (2a) ist derart gestaltet, daß sie bei Auftreten des Umschaltsignals (12) keine der Dioden im Mehr-Diodenschalter (32) durchschaltet.

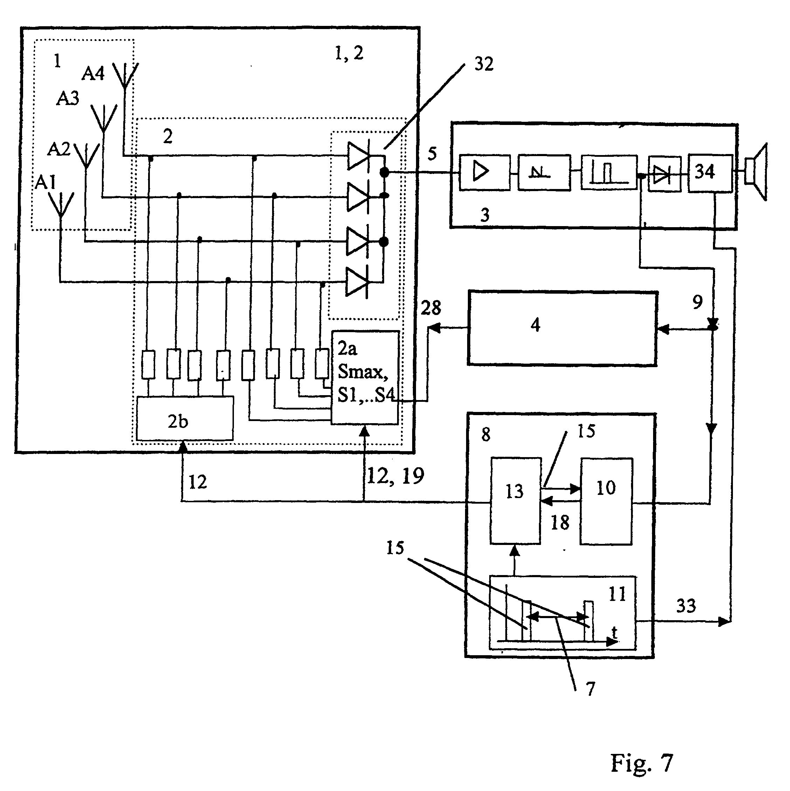

Fig 7 Beispiel eines Scanning-Antennen-Diversitysystems, bei dem synchron mit den Pegelvergleichszeiten (6) Stummschaltungspulse (33) gebildet werden, welche einer vorzugsweise im Niederfrequenzteil des Empfängers (3) befindlichen Stummschaltung (34) zugeführt werden.

Fig. 1 zeigt ein erfindungsgemäßes Scanning-Antennen-Diversitysystem, dessen grundsätzlicher Aufbau in der Beschreibung zur Fig. 1 bereits erläutert wurde. Antennen (A1,A2,A3,...) mit der logischen Schalteinrichtung (2) stellen eine nahezu beliebige Mehrantennenanlage (1) dar, die zu jedem Zeitpunkt ein Empfangssignal (5) an den Empfänger (3) abgibt. Bei unterschiedlichen diskret verfügbaren Schaltstellungen (S1,S2...) ergeben sich somit bekannterweise unterschiedliche Empfangssignale (5), wie es aus der DE 4403 612 und der DE 196 07 045 bekannt ist. Unterschiedliche Empfangssignale (5) können beispielsweise durch unterschiedliche Beschaltungen mit Blindwiderständen von miteinander elektromagnetisch verkoppelten Antennenteilen, oder, wie in Fig. 1 der DE 4403 612, aus Linearkombinationen aus Antennensignalen mit Hilfe einer Antennenmatrix (dort 10) gebildet werden. Der Vorteil von Scanning-Antennen-Diversitysystemen dieser Art ist der geringe Aufwand im Empfänger (3), der keine Mehrfachtuner o.ä. aufwendige Zusatzeinrichtungen erfordert und aufwandsarm anhand unterschiedlicher Schaltstellungen (S1,S2...) die Gestaltung einer Vielzahl verschiedener Empfangssignale (5) ermöglicht. Als Diversityprozessor (4) eignet sich besonders ein Prozessortyp, der über einen extrem schnellen Störungsdetektor verfügt. In der Vergangenheit hat sich hierfür der Prozessor vom Typ TEA 6101 als äußerst leistungsstark erwiesen. Der Prozessor reagiert auf Störung mit einer Indikationszeit von ca. 30 Mikrosekunden, die im wesentlichen von der ZF-Bandbreite des Empfängers (3) bestimmt ist. Manche Störungsformen ergeben jedoch wesentlich längere Indikationszeiten für eine Störung.

Die grundsätzliche Wirkungsweise der vorliegenden Erfindung kann anschaulich anhand der Fig. 2 durch Betrachtung der Empfangssignale (5) erläutert werden, die sich für zwei unterschiedliche Schaltstellungen S1 und S2 über der gefahrenen, auf die Wellenlänge Lambda der Empfangsfrequenz (f) bezogenen Wegstrecke ergeben. Diese ist für den Fall eines Störpegels, der nennenswert unter dem Medianwert der beiden Empfangssignale (5) liegt, dargestellt. Jedes der beiden Empfangssignale (5) weist die bekannten, durch den Mehrwegeempfang bedingten Pegeleinbrüche auf. Ohne die Maßnahmen der vorliegenden Erfindung würde der Diversityprozessor (4) dann in die jeweils andere Schaltstellung umschalten, wenn für das Empfangssignal (5) im Bereich der Pegeleinbrüche der Störabstand zu gering ist. Dies hat zur Folge, daß bei den in der Fig. 2 beispielhaft dargestellten Empfangsverhältnissen über die betrachtete Wegstrecke ca. 4 Umschaltungen erfolgen. Erfindungsgemäß wird nun mit Hilfe der Pegelvergleichseinrichtung (8) in der logischen Schalteinrichtung (2) nach jedem der zyklisch erfolgenden Pegelvergleichsvorgänge während des jeweils darauffolgenden Zeitintervalls (7) das größere der beiden Empfangssignale (5) neben den diskret verfügbaren Schaltstellungen S1, S2 zusätzlich als gesonderte Maximalpegel-Schaltstellung (Smax) zur Auswahl verfügbar. Bei einer Störsituation wie in Fig. 2 wird dieses jeweils größte Empfangssignal (5) aus den Schaltstellungen S1, S2 keine Aktivität im Diversityprozessor (4) auslösen, da es zu jedem Zeitpunkt nennenswert über dem Störpegel liegt. In Fig. 2 unten ist der Wechsel der Schaltstellungen angegeben, mit dem die Maximalpegel-Schaltstellung (Smax) in den verschiedenen Wegbereichen gebildet ist. Der Wechsel selbst erfolgt jeweils innerhalb einer im Interesse der Unhörbarkeit so kurz wie möglich zu gestaltenden Pegelvergleichszeit (6) nach jedem Zeitintervall (7). Bei zyklischer Prüfung der Empfangssignale (5) gemäß den Schaltstellungen S1, S2, Smax während der Zeitintervalle (7) wird der Diversityprozessor (4) aufgrund der kleineren Wahrscheinlichkeit des Auftretens einer Störung in der Regel wesentlich länger bei der Schaltstellung Smax verharren als auf den Schaltstellungen S1, S2. Damit ist die Umschalthäufigkeit wesentlich reduziert. In der Darstellung in Fig. 2 ist vorausgesetzt, daß die sich zyklisch wiederholenden Zeitintervalle (7) einige Größenordnungen kürzer gewählt sind als die Zeitdauer, die das Fahrzeug benötigt, um eine Wegstrecke von einer halben Wellenlänge der Empfangsfrequenz (f) zurückzulegen, sodaß die Zeitintervalle dort in der Fig. 2 nicht erkennbar sind. Erfindungsgemäße Vorteile lassen sich noch mit Zeitintervallen (7) erreichen, während derer sich das Fahrzeug um 1/5 der Wellenlänge (Lambda) fortbewegt. In der Praxis wird man jedoch anstreben, daß bei einer Fortbewegung um eine halbe Wellenlänge (Lambda) mindestens 10 Zeitintervalle (7) treffen. Ist v die Fahrgeschwindigkeit, so kann als Richtwert für das Zeitintervall (7) = $T_i$ gelten:

$$T_i <= Lambda/(2* 10*v)$$

Die Pegelvergleichszeit (6) = $T_p$ ist wiederum um mindestens eine Größenordnung kleiner zu realisieren als $T_i$. Bei der in der Praxis gegebenen Vernachlässigbarkeit der reinen Umschaltzeiten ergibt sich die Zykluszeit für den gesamten Vorgang zu:

$$T_z = T_i + T_p$$

und die Zyklusfrequenz zu:

$$f_z = 1/T_z \text{ d.h. angenähert } 1/T_i$$

Damit ist die Zyklusfrequenz größer als die Richtgröße

$$f_{zmin} = 2* v_{kmh} * f_{MHz}/100 \text{ in Hz}$$

zu wählen.

Im UKW-Frequenzbereich mit $f_{MHz} = 100$ entspricht somit der Richtwert für die minimale Zyklusfrequenz $f_{zmin}$ in Hz etwa der zweifachen Fahrgeschwindigkeit in km/h. Mit einer unter Berücksichtigung von Einschwingvorgängen realisierbaren Pegelvergleichszeit (6) = $T_p$ von ca. 20 Mikrosekunden ergibt sich für dieses Beispiel ein Tastverhältnis von mindestens

$$T_p / T_i = 2*10^{-5}*f_{zmin}$$

und bei UKW von

$$T_p / T_i = 4* 10^{-5} * v_{kmh},$$

welches auch bei den höchsten vorkommenden Fahrzeuggeschwindigkeiten klein genug gehalten werden kann.

Die Erfindung kann aufwandsarm auch auf eine große Anzahl verfügbarer Schaltstellungen vorteilhaft angewandt werden. Das Empfangssignal (5) gemäß der Maximalpegel-Schaltstellung (Smax) wird aufgrund der sich stets ändernden Pegelverhältnisse an den Antennen infolge der Mehrwegeausbreitung mit laufend einander abwechselnden, aus der Vielzahl von Antennensignalen durch die Pegelvorauswahl gewonnen. Je größer die Anzahl der verfügbaren unterschiedlichen Schaltstellungen mit unterschiedlichen Empfangssignalen (5) ist, umso kleiner sind die Einbrüche im Verlauf des Empfangssignals (5) bei der Maximalpegel-Schaltstellung (Smax). Wichtig ist dabei insbesondere in Empfangsgebieten mit kleinen bis mittleren Signalpegeln, daß der nach einem Störungskriterium arbeitende Diversityprozessor (4) zu keiner Zeit blockiert ist, sondern, daß das zusätzlich angebotene Maximalpegel-Signal bezüglich der Feststellung einer Störung durch den Diversityprozessor (4) vermieden wird.

Mit der Erfindung wird der zusätzliche Vorteil erzielt, daß auch der mittlere Störabstand des Empfangssignals (5) gemäß der Maximalpegel-Schaltstellung (Smax) nennenswert verbessert ist. Aufgrund der Vorselektion der Maximalpegel-Schaltstellung (Smax) aus den verfügbaren Schaltstellungen folgt das zugehörige Empfangssignal (5) nach einem Maximum dem Pegeleinbruch weit weniger tief und wird mit großer Häufigkeit bei noch gutem Störabstand bereits von einer günstigeren Schaltstellung- dem aktualisierten Smax- abgelöst.

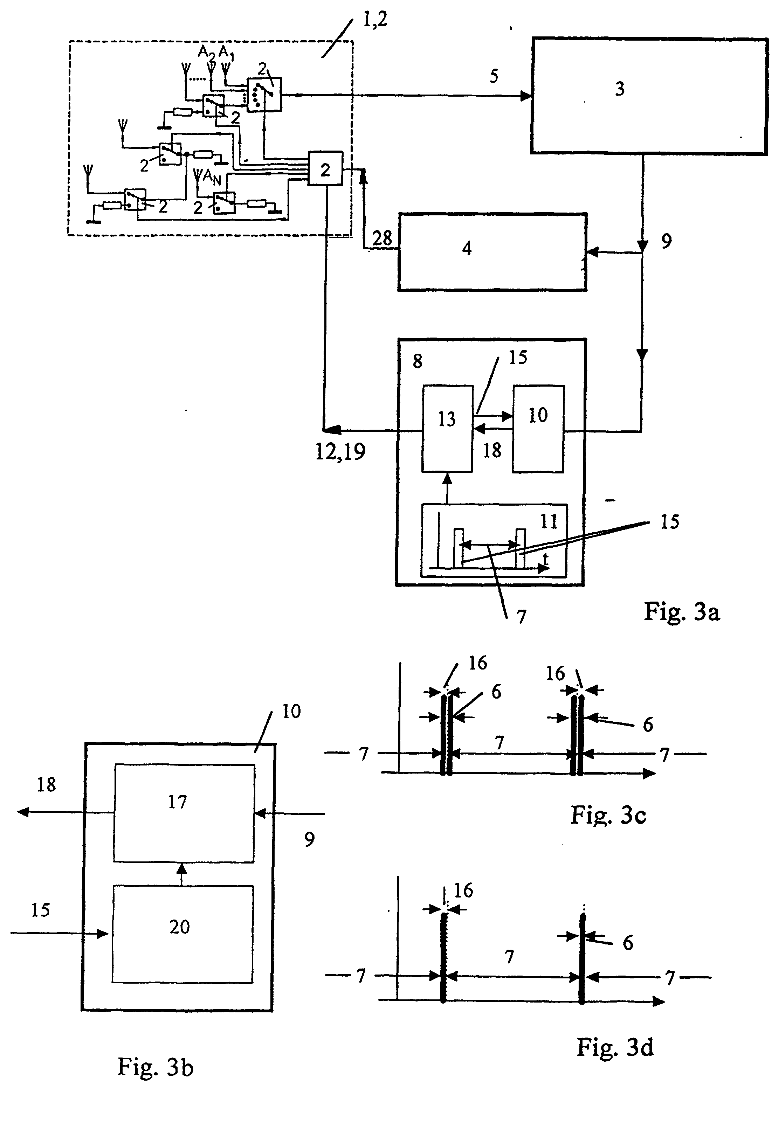

In Fig. 3 a ist die Pegelvergleichseinrichtung (8) in einer Weiterbildung der Erfindung mit einem sehr schnell messenden Pegelkomparator (10) und einer Logikschaltung (13) zur Feststellung und zum Vergleich zeitlich nacheinander vorliegender Pegel des aus dem Empfangssignal (5) abgeleiteten Empfangssignals (9) und mit einem periodisch arbeitenden Zeitintervallgeber (11) ausgestattet. Der Zeitintervallgeber (11) löst nach Ablauf jedes Zeitintervalls (7) im Pegelkomparator (10) während der Pegelvergleichszeit (6) über die Logikschaltung (13) einen Pegel-Prüf und -Auswahlvorgang aus derart, daß der Schaltzustand der logischen Schalteinrichtung (2) innerhalb der Pegelvergleichszeit (6) durch ein Umschaltsignal (12) der Logikschaltung (13) in eine weitere Schaltstellung umgeschaltet wird und nach Ablauf der Pegelvergleichszeit (6) in der Logikschaltung (13) die aktuelle Maximalpegel-Schaltstellung (Smax) als Adressignal (19) abgelegt ist. In der logischen Schalteinrichtung (2) für zyklisches Weiterschalten bei Erkennung einer Störung durch den Diversityprozessor (4) ist eine Liste der Schaltstellungsadressen gebildet, welcher die der aktuellen Maximalpegel-Schaltstellung (Smax) zugeordnete Adresse als Adressignal (19) durch Übernahme aus der Logikschaltung (13) in die logische Schalteinrichtung (2) hinzugefügt wird, sodaß diese in dieser Liste laufend aktualisiert enthalten ist. Damit ist auch diese Adresse bei der zyklischen Durchschaltung der Empfangssignale (5) zum Empfänger (3) erfaßt.

In den Figuren 3b und 3c sind beispielhaft detaillierte Weiterbildungen des Pegelkomparators (10) und der Vorgang während der Pegelvergleichszeit (6) am Ende eines Zeitintervalls (7) dargestellt. Bei Initiierung des Pegelvergleichs durch den Pegelvergleichspuls (15) über die Logikschaltung (13) wird die logische Schalteinrichtung (2) in die bei dem vorangegangenen Pegelvergleich als logisches Signal vorliegende Maximalpegel-Schaltstellung (Smax) geschaltet. Im Pegelkomparator (10) sind ein über den Pegelvergleichspuls (15) getriggerter Sample-Zeitgeber (20) und ein Sample- und Hold-Entscheider (17) enthalten, der über eine kurze Sample-Zeit (16) (Fig. 3c) den Pegel des abgeleiteten Empfangssignals (9) feststellt und diesen Pegelwert hält, um nach Umschalten der Schaltstellung der logischen Schalteinrichtung (2) in eine andere Schaltstellung während einer zweiten Sample-Zeit (16) den zugehörigen Pegel des abgeleiteten Empfangssignals (9) festzustellen und die Entscheidung über den größeren der beiden festgestellten Pegel der Logikschaltung (13) als Binärsignal (18) mitzuteilen. Im Zeitdiagramm in Fig. 3c sind die für die Umschaltvorgänge notwendige Zeiten wegen Vernachlassigbarkeit nicht berücksichtigt. Damit ist die Pegelvergleichszeit (6) praktisch gleich der doppelten Sample-Zeit (16). Die Sample-Zeit (16) ist die Meßzeit, die unter Berücksichtigung von Einschwingvorgängen notwendig ist, um den Pegel bei einer Schaltstellung festzustellen.

Im Interesse einer Verkürzung der Pegelvergleichszeit (6) ist es in einer Weiterbildung der Erfindung vorteilhaft, den größeren Pegelwert aus dem letzten Pegelvergleich während des Zeitintervalls (7) mit Hilfe des Sample- und Hold-Entscheiders (17) festzustellen und zu halten und die zugehörige Adresse der Schaltstellung der logischen Schalteinrichtung (2) in der Logikschaltung (13) zu speichern. Hierzu wird bei Initiierung des Pegelvergleichs durch den Pegelvergleichspuls (15) über die Logikschaltung (13) die logische Schalteinrichtung (2) in eine andere Schaltstellung umgeschaltet und der Sample- und Hold-Entscheider (17) während einer Sample-Zeit (16) mit Hilfe eines Sample-Zeitgebers (20) stellt den zugehörigen Pegel des abgeleiteten Empfangssignals (9) fest. Die Entscheidung über den größeren der beiden festgestellten Pegel wird der Logikschaltung (13) als Binärsignal (18) mitgeteilt und die dazugehörige Adresse der Schaltstellung der logischen Schalteinrichtung (2) in der Logikschaltung (13) wird aktualisiert gespeichert. Damit verkürzt sich die Pegelvergleichszeit (6) praktisch auf nur eine Sample-Zeit (16), wie es in Fig. 3d dargestellt ist.

In Fig. 5 ist eine einfache Ausführungsform einer logischen Schalteinrichtung (2) dargestellt, bei der ein wesentlicher Teil der Logik durch die Verdrahtung selbst realisiert ist. Die logische Schalteinrichtung (2) besteht aus einem elektronischen Weiterschalter (31) und einem adressierbaren elektronischen Umschalter (30), dessen Eingänge an die Antennen (A1..A4) angeschlossen sind. Gemäß der oben beschriebenen Wirkungsweise sind die Empfangssignale (5) der Antennen A1,A2 und A3 an den Eingängen P4,P3,P2 des elektronischen Weiterschalters (31) diskret verfügbar. Das über die Maximalpegel-Schaltstellung (Smax) am Ausgang des elektronischen Umschalters (30) verfügbare Maximalpegelsignal aus allen Antennen A1..A4 ist am Eingang P1 des elektronischen Weiterschalters (31) verfügbar und steht unter den anderen Antennensignalen stets aktualisiert zur Verfügung. Als Besonderheit ist hierbei zu nennen, daß nicht alle Antennensignale am elektronischen Weiterschalter (31) aufgrund der begrenzten Anzahl der Eingangsanschlüsse diskret dem elektronischen Weiterschalters (31) zugeführt sind. Es ist offensichtlich, daß durch eine aufwandsarme Erweiterung der Anzahl der Eingangsanschlüsse des elektronischen Weiterschalters (31) diesem auch das Signal der Antenne A4 diskret hinzugeführt werden könnte.

Fig. 6 zeigt das Beispiel eines Scanning-Antennen-Diversitysystem mit einer aus einem Mehr-Diodenschalter (32), einer Weiterschaltlogik (2a) und einer Umschaltlogik (2b) bestehenden logischen Schalteinrichtung (2). Die Wirkungsweise wurde bereits erläutert. Im Gegensatz zur Anordnung in Fig. 5 ist die Liste der Adressen in der Weiterschaltlogik (2a) um die Zahl Eins größer als die Anzahl der diskret zugeführten Signale. Aufgrund der einfachen Verfügbarkeit von elektronischen Logikschaltungen läßt sich auf diese Weise auf wirtschaftliche Weise ein hoch effektives Scanning-Antennen-Diversitysystem realisieren.

Alle hier gezeigten Beispiele lassen die Vielfalt der Realisierungsmöglichkeiten eines Scanning-Antennen-Diversitysystems nach dem Wirkungsprinzip der vorliegenden Erfindung erkennen. Mit dem Aufzeigen der Beispiele soll in der Hauptsache dieses Wirkungsprinzip klar zum Ausdruck gebracht werden. In Weiterentwicklungen dieses Wirkungsprinzips wird man vorteilhaft insbesondere alle elektronischen Baueinheiten, wie z.B. die Weiterschaltlogik (2a), die Umschaltlogik (2b) und die Pegelvergleichseinrichtung (8) und ggfs. auch den Diversityprozessor (4) zu einer integralen elektronischen Baueinheit zusammenfassen. Auch die beschriebenen Abläufe der Steuerungen können vielfältig gestaltet werden.

Insbesondere bei Anwendungen für höhere Fahrgeschwindigkeiten und höhere Empfangsfrequenzen können sich die Pegelvergleichszeiten (6) infolge der daraus resultierenden kurzen Zeitintervalle (7) bei kurzen Wellenlängen störend bemerkbar machen. Zur Vermeidung dieser Störung können in einer vorteilhaften Weiterbildung der Erfindung synchron mit den Pegelvergleichszeiten (6) Stummschaltungspulse (33) gebildet werden, welche einer vorzugsweise im Niederfrequenzteil des Empfängers (3) befindlichen Stummschaltung (34) zugeführt werden. Der Stummschaltungspuls (33) ist hinsichtlich seiner Dauer und der mit ihm erzielten Austasttiefe derart zu gestalten, daß die Stummschaltung während der Pegelvergleichszeit (6) in der Weise erfolgt, daß die Pegelvergleichsvorgänge vollkommen unhörbar sind. Eine Einrichtung dieser Art ist beispielhaft in Fig. 7 dargestellt.

Untersuchungen haben gezeigt, daß - insbesondere bei Verwendung aktiver Antennen, welche für Antennen-Diversity-Systeme aus verschiedenen Gründen eine Voraussetzung sind - mit aufwendiger cophasiger Addition mehrerer Antennensignale keine besseren S/N-Verläufe realisiert werden können als bei der erfindungsgemäßen Selektion des größten Signalpegels aus einer Gruppe von Signalen. Die vorliegende Erfindung ermöglicht somit beste S/N-Verläufe bei sehr geringem Aufwand.

## Liste der in den Ansprüchen verwendeten Bezeichnungen

Mehrantennenanlage (1)
Antennen (A1,A2,A3,...)
logische Schalteinrichtung (2)
Weiterschaltlogik (2a)
Umschaltlogik (2b)
Empfänger (3)
Diversityprozessor (4)
Empfangssignal (5)
Pegelvergleichszeit (6)
Zeitintervall (7)
diskret verfügbare Schaltstellungen (S1,S2...)
Maximalpegel-Schaltstellung (Smax)
Pegelvergleichseinrichtung (8)
abgeleitetes Empfangssignal (9)
Pegelkomparator (10)
Zeitintervallgeber (11)
Umschaltsignal (12)
Logikschaltung (13)
Einstellsignal (14)
Pegelvergleichspuls (15)
Sample-Zeit (16)
Sample- und Hold-Entscheider (17)
Binärsignal (18)
Adressignal (19)
Sample-Zeitgeber (20)
Halteeingang (21)
elektrisches Tachometersignal (22)
Empfangssignalpegelindikator (23)
Stop-Schaltung (24)

Grenzpegel (25)
Pulszähler (26)
Pulsfrequenzgrenzwert (27)
Weiterschaltpulse (28)
Abschalteinrichtung (29)
elektronischer Umschalter (30)
elektronischer Weiterschalter (31)
Mehr-Diodenschalter (32)
Stummschaltungspuls (33)
Stummschaltung (34)


**Patentansprüche**

1. Scanning-Antennen-Diversitysystem für Fahrzeuge mit einer Mehrantennenanlage (1) mit mindestens zwei Antennen mit steuerbarer logischer Schalteinrichtung (2), bei der mit unterschiedlichen Schaltstellungen jeweils ein diversitätsmäßig unterschiedliches Empfangssignal (5) einem Empfänger (3) zugeführt ist und dieser mit einem aus dem Empfangssignal (5) abgeleiteten Empfangssignal (9) einen Diversityprozessor (4) ansteuert, der bei Vorliegen einer Empfangsstörung die logische Schalteinrichtung (2) in eine andere Schaltstellung weiterschaltet,
   **dadurch gekennzeichnet, daß**
   während möglichst kurzer Pegelvergleichszeiten (6), welche jeweils nach Ablauf eines bezüglich der zeitlichen Änderung der Empfangssignalpegel aufgrund der Fahrzeugbewegung geeignet gewählten längeren Zeitintervalls (7) zyklisch wiederholend initiiert sind, die bei unterschiedlichen aus einer Reihe von zu prüfenden Schaltstellungen (S1,S2...) der logischen Schalteinrichtung (2) auftretenden Pegel des abgeleiteten Empfangssignals (9) in einer Pegelvergleichseinrichtung (8) vergleichend erfaßt sind in der Weise, daß die dem größeren aktuellen Empfangssignalpegel zugeordnete Maximalpegel-Schaltstellung (Smax) am Ende der Pegelvergleichszeit (6) jeweils in der aktuellen Empfangssituation laufend ermittelt ist, und die Pegelvergleichszeit (6) so kurz gewählt ist, daß sie den Empfang nicht wahrnehmbar beeinträchtigt und der Diversityprozessor (4) so gestaltet ist, daß durch den Pegelprüfvorgang keine Weiterschaltung durch ihn ausgelöst ist und in der zyklischen Durchschaltung der Empfangssignale (5) zum Empfänger (3) und der Prüfung auf Störungsfreiheit neben diskreten Schaltstellungen (S1,S2...) der logischen Schalteinrichtung (2) zu jedem Zeitpunkt auch die aktualisierte, dem größeren aktuellen Empfangspegel zugeordnete Maximalpegel-Schaltstellung (Smax) bei der zyklischen Durchschaltung der Empfangssignale (5) zum Empfänger (3) erfaßt ist.

2. Scanning-Antennen-Diversitysystem nach Anspruch 1
   **dadurch gekennzeichnet, daß**
   das Zeitintervall (7) so klein gewählt ist, daß das Fahrzeug nicht mehr als die Wegstrecke Lambda/ 5 während eines Zeitintervalls (7) zurücklegt und die Pegelvergleichzeit (6) vorzugsweise im Mikrosekundenbereich gewählt ist.

3. Scanning-Antennen-Diversitysystem nach Anspruch 1 und 2
   **dadurch gekennzeichnet, daß**
   bei Vorhandensein von mehr als zwei Schaltstellungen (S1,S2,S3...) in der logischen Schalteinrichtung (2), während einer Pegelvergleichszeit (6) jeweils diejenige von zwei der möglichen Schaltstellungen (S1,S2,S3...) ermittelt ist, die den größeren Pegel der beiden zugehörigen Empfangssignale (5) liefert und auf gleichartige Weise während der darauffolgenden Prüfzeit diejenige der Schaltstellungen (S1,S2,S3...) ermittelt ist, welche im Vergleich der zuletzt ermittelten Schaltstellung zu einer weiteren der möglichen Schaltstellungen (S1,S2,S3...) den größeren Pegel des Empfangssignals (5) liefert und nach Erfassung aller möglicher Schaltstellungen (S1,S2,S3...) nach einer entsprechenden Anzahl von Zeitintervallen (7) mit Pegelvergleichszeiten (6), die aktuelle Maximalpegel-Schaltstellung (Smax) ermittelt ist

4. Scanning-Antennen-Diversitysystem nach Anspruch 1 bis 3
   **dadurch gekennzeichnet, daß**
   in der Pegelvergleichseinrichtung (8) ein sehr schnell messender Pegelkomparator (10) und eine Logikschaltung (13) zur Feststellung und zum Vergleich zeitlich nacheinander vorliegender Pegel des abgeleiteten Empfangssignals (9) und ein periodisch arbeitender Zeitintervallgeber (11) vorhanden ist, welcher nach Ablauf jedes Zeitintervalls (7) im Pegelkomparator (10) während der Pegelvergleichszeit (6) über die Logikschaltung (13) einen Pegel-Prüf und -Auswahlvorgang auslöst derart, daß der Schaltzustand der logischen Schalteinrichtung (2) innerhalb der Pegelvergleichszeit (6) durch ein Umschaltsignal (12) der Logikschaltung (13) in eine weitere Schaltstellung umgeschaltet wird und nach Ablauf der Pegelvergleichszeit (6) in der Logikschaltung (13) die aktuelle Maximalpegel-Schaltstellung (Smax) als Adressignal (19) abgelegt ist und in der logischen Schalteinrichtung (2) für zyklisches Weiterschalten bei Erkennung einer Störung durch den Diversityprozessor (4) eine Liste der Schaltstellungsadressen (14) vorhanden ist und die der aktuellen Maximalpegel-Schaltstellung (Smax) zugeordnete Adresse als Adressignal (19) durch Übernahme aus der Logikschaltung (13) in die logische Schalteinrichtung (2) in dieser Liste laufend aktualisiert enthalten ist, sodaß auch diese Adresse bei der zyklischen Durchschaltung der Empfangssignale (5) zum Empfänger (3) erfaßt ist.

5. Scanning-Antennen-Diversitysystem nach Anspruch 4
   **dadurch gekennzeichnet, daß**
   bei Initiierung des Pegelvergleichs durch den Pegelvergleichspuls (15) über die Logikschaltung (13) die logische Schalteinrichtung (2) in die bei dem vorangegangenen Pegelvergleich als logisches Signal vorliegende Maximalpegel-Schaltstellung (Smax) geschaltet ist und im Pegelkomparator (10) ein Sample- und Hold-Entscheider (17) enthalten ist, der über eine kurze Sample-Zeit (16) den Pegel des abgeleiteten Empfangssignals (9) feststellt und diesen Pegelwert hält, um nach Umschalten der Schaltstellung der logischen Schalteinrichtung (2) in eine andere Schaltstellung während einer zweiten Sample-Zeit (16) den zugehörigen Pegel des abgeleiteten Empfangssignals (9) feststellt und die Entscheidung über den größeren der beiden festgestellten Pegel der Logikschaltung (13) als Binärsignal (18) mitteilt.

6. Scanning-Antennen-Diversitysystem nach Anspruch 4
   **dadurch gekennzeichnet, daß**
   im Pegelkomparator (10) ein Sample- und Hold-Entscheider (17) enthalten ist, der den größeren Pegelwert aus dem letzten Pegelvergleich während des Zeitintervalls (7) hält und die zugehörige Adresse der Schaltstellung der logischen Schalteinrichtung (2) in der Logikschaltung (13) gespeichert ist und bei Initiierung des Pegelvergleichs durch den Pegelvergleichspuls (15) über die Logikschaltung (13) die logische Schalteinrichtung (2) in eine andere Schaltstellung umgeschaltet wird und der Sample- und Hold-Entscheider (17) während einer Sample-Zeit (16) mit Hilfe eines Sample-Zeitgebers (20)
   den zugehörigen Pegel des abgeleiteten Empfangssignals (9) feststellt und die Entscheidung über den größeren der beiden festgestellten Pegel der Logikschaltung (13) als Binärsignal (18) mitteilt und die dazugehörige Adresse der Schaltstellung der logischen Schalteinrichtung (2) in der Logikschaltung (13) aktualisiert gespeichert ist

7. Scanning-Antennen-Diversitysystem nach Anspruch 1 bis 6
   **dadurch gekennzeichnet, daß**
   Diversityprozessor (4) einen Halteeingang (21) besitzt, welcher bei Anlegen eines Haltesignals ein Weiterschalten der logischen Schalteinrichtung (2) bei Vorliegen einer Störung im abgeleiteten Empfangssignal (9) blockiert und zur sicheren Vermeidung eines durch den Pegelvergleichsvorgang verursachten Weiterschaltens das Haltesignal während der Pegelvergleichszeit (6) angelegt ist.

8. Scanning-Antennen-Diversitysystem nach Anspruch 1 bis 7
   **dadurch gekennzeichnet, daß**
   das Zeitintervall (7) in Abhängigkeit von der Fahrgeschwindigkeit in der Weise verändert wird, daß als Richtwert sein Reziprokwert der Fahrgeschwindigkeit proportional eingestellt wird.

9. Scanning-Antennen-Diversitysystem nach Anspruch 8
   **dadurch gekennzeichnet, daß**
   das Zeitintervall (7) in Abhängigkeit von dem im Fahrzeug verfügbaren elektrischen Tachometersignal (22) eingestellt ist.

10. Scanning-Antennen-Diversitysystem nach Anspruch 1 bis 9
    **dadurch gekennzeichnet, daß**
    ein Empfangssignalpegelindikator (23) zur Feststellung des gemittelten Empfangspegels und eine Stop-Schaltung (24) vorhanden sind und bei Überschreiten eines Grenzpegels (25) in gut versorgten Empfangsgebieten die Pegelvergleichspulse (15) ausgesetzt sind.

11. Scanning-Antennen-Diversitysystem nach Anspruch 1 bis 10
    **dadurch gekennzeichnet, daß**
    ein Pulszähler (26) zur Feststellung der Schalthäufigkeit des Diversityprozessors (4) vorhanden ist und bei Überschreiten des Pulsfrequenzgrenzwerts (27) die Weitergabe der Weiterschaltpulse (28) des Diversityprozessors (4) an die logische Schalteinrichtung (2) über eine Abschalteinrichtung (29) verhindert und die Abschalteinrichtung (29) ein Einstellsignal (14) an die logische Schalteinrichtung (2) gibt derart, daß die Maximalpegel-Schaltstellung (Smax) eingestellt ist.

12. Scanning-Antennen-Diversitysystem nach Anspruch 1 bis 11
    **dadurch gekennzeichnet, daß**
    die logische Schalteinrichtung (2) aus der Kombination eines mehrpoligen elektronischen Weiterschalters (31), welcher bei Auftreten eines Weiterschaltpulses (28) am Ausgang des Diversityprozessors (4) um eine Schaltstellung weiterschaltet, und eines mehrpoligen elektronischen Umschalters (32), dessen Eingangsanschlüssen Signale aus Antennen (A1,A2,A3,...) zugeführt sind, gebildet ist und der elektronische Umschalter (30), initiiert durch die Pegelvergleichspulse (15) über die Logikschaltung (13) zum Zwecke des Pegelvergleichs über das Umschaltsignal (12) derart angesteuert ist, daß er während der Zeitintervalle (7) unter den verfügbaren Schaltstellungen (S1...S4) die Maximalpegel-Schaltstellung (Smax) annimmt, und das zugehörige Maximalpegel-Signal einem der Eingangsanschlüsse (P1...P4) des elektronischen Weiterschalters (31) zugeführt ist und den übrigen Eingangsanschlüssen (P1...P4) des elektronischen Weiterschalters (31) diskrete Signale aus den Antennen (A1,A2,A3,...) zugeführt sind.

13. Scanning-Antennen-Diversitysystem nach Anspruch 11
**dadurch gekennzeichnet, daß**
die logische Schalteinrichtung (2) einen Mehr-Diodenschalter (32) enthält und jedes Signal aus den Antennen (A1,A2,A3,...) durch alternatives Aktivieren einer Diode zum Eingang des Empfängers (3) durchgeschaltet wird und zur Steuerung der Durchlässigkeit der Dioden eine Umschaltlogik (2b) und eine Weiterschaltlogik (2a) vorhanden sind und in der Weiterschaltlogik (2a) die Adressenliste der Signale (S1,S2,S3..) aus den Antennen (A1,A2,A3,...), erweitert um die Adresse der Maximalpegel-Schaltstellung (Smax) durch Steuerung mit dem Adressignal (19), abgelegt ist und die Adressenliste bei Auftreten eines Weiterschaltpulses (28) während eines Zeitintervalls (7) am Ausgang des Diversityprozessors (4) um eine weitere Position durch Aktivieren der dazugehörigen Diode abgearbeitet wird und die Weiterschaltlogik (2a) bewirkt, daß bei Auftreten des Umschaltsignals (12) keine der Dioden im Mehr-Diodenschalter (32) aktiviert ist.

14. Scanning-Antennen-Diversitysystem nach Anspruch 1 bis 13
**dadurch gekennzeichnet, daß**
in der Pegelvergleichseinrichtung (8) ein Stummschaltungspuls (33) gebildet ist, der einer vorzugsweise im Niederfrequenzteil des Empfänger (3) befindlichen Stummschaltung (34) zugeführt ist und der Stummschaltungspuls (33) hinsichtlich seiner Dauer und der mit ihm erzielten Austasttiefe derart gestaltet ist, daß die Stummschaltung während der Pegelvergleichszeit (6) erfolgt, sodaß die Pegelvergleichsvorgänge vollkommen unhörbar sind.

**Claims**

1. Scanning antenna diversity system for vehicles with a multi-antenna array (1) having at least two antennas with a controllable logical switching device (2) wherein, in different switching positions, a diversely different reception signal (5) is fed to a receiver and the latter actuates a diversity processor (4) with a reception signal (9) derived from the reception signal (5), said diversity processor (4) switching the logical switching device (2) into a different switching position when reception interference occurs, **characterised in that** during the shortest possible level comparison periods (6) which are initiated with cyclical repetition after the expiry of a longer time interval (7) suitably selected with regard to the time change of the reception signal level on account of the movement of the vehicle, the levels of the derived reception signal (9) occurring in different switching positions (S1, S2...) of the logical switching device (2) selected from a series of such switching positions to be tested are detected for comparison in a level comparing device (8) in such a way that the maximum level switching position (Smax) assigned to the greater reception signal level at that moment is continuously determined at the end of the level comparison period (6) in the reception situation at that moment, and the level comparison time (6) is selected to be so short that it does not perceptibly affect reception and the diversity processor (4) is constructed so that the level testing operation does not initiate any advance switching through it, and in the cyclical switching through of the reception signals (5) to the receiver (3) and testing for lack of interference, in addition to discrete switching positions (S1, S2...) of the logical switching device (2) at each moment the updated maximum level switching position (Smax) assigned to the higher reception level at that time during the cyclical switching through of the reception signals (5) to the receiver (3) is detected.

2. Scanning antenna diversity system according to claim 1, **characterised in that** the time interval (7) is made sufficiently small so that the vehicle covers no more than the distance lambda/5 during one time interval (7) and the level comparison time (6) is preferably of the order of microseconds.

3. Scanning antenna diversity system according to claims 1 and 2, **characterised in that** if there are more than two switching positions (S1, S2, S3...) in the logical switching device (2), during a level comparison period (6) the particular switching position of two of the possible switching positions (S1, S2, S3...) is detected which yields the higher level of the two associated reception signals (5) and similarly during the next testing period the particular switching position (S1, S2, S3...) which delivers the higher level of the reception signal (5) to another of the possible switching positions (S1, S2, S3...) compared with the switching position last determined is detected and after all possible switching positions (S1, S2, S3...) have been detected after a corresponding number of time intervals (7) with level comparison periods (6) the current maximum level switching position (Smax) is determined.

4. Scanning antenna diversity system according to claims 1 to 3, **characterised in that** in the level comparison device (8), there is a very fast measuring level comparator (10) and a logic circuit (13) for determining and comparing levels of the derived reception signal (9) occurring one after the other in time and a periodically operating time interval transmitter (11) which after the expiry of each time interval (7) in the level comparator (10) during the level comparison period (6) initiates a level testing and selecting process via the logic circuit (13) such that the switching state of the logical switching device (2) is switched into another switching position within the level comparison period (6) by a changeover signal (12) of the logic circuit (13) and after the level comparison period (6) has expired in the logic circuit (13) the current maximum level switching position (Smax) is stored as the address signal (19) and in the logical switching device (2) for cyclical advance switching in response to the detection of interference by the diversity processor (4) there is a list of switching position addresses (14) and the address assigned to the current maximum level switching position (Smax) is contained in continuously updated form as the address signal (19) by taking it from the logic circuit (13) into the logical switching device (2), so that this address is also detected when the reception signals (5) are cyclically switched through to the receiver (3).

5. Scanning antenna diversity system according to claim 4, **characterised in that** on initiation of the level comparison by the level comparison impulse (15) through the logic circuit (13) the logical switching device (2) is switched into the maximum level switching position (Smax) which is present as the logical signal in the preceding level comparison and the level comparator (10) contains a sample and hold decider (17) which determines the level of the derived reception signal (9) over a short sample period (16) and holds this level value and after the switching position of the logical switching device (2) has been switched into another switching position, determines the associated level of the derived reception signal (9) during a second sample period (16) and communicates the decision as to the higher of the two levels detected to the logic circuit (13) as a binary signal (18).

6. Scanning antenna diversity system according to claim 4, **characterised in that** the level comparator (10) contains a sample and hold decider (17) which holds the higher level from the last level comparison during time interval (7) and the associated address of the switching position of the logical switching device (2) is stored in the logic circuit (13) and when the level comparison is initiated by the level comparison impulse (15) through the logic circuit (13) the logical switching device (2) is switched into another switching position and the sample and hold decider (17) detects the associated level of the derived reception signal (9) during a sample period (16) with the aid of a sample timer (20) and communicates the decision as to the higher of the two levels detected to the logic circuit (13) as a binary signal (18) and the associated address of the switching position of the logical switching device (2) is stored in updated form in the logic circuit (13).

7. Scanning antenna diversity system according to claims 1 to 6, **characterised in that** the diversity processor (4) has a holding input (21) which blocks further switching of the logical switching device (2) in response to the presence of a holding signal if there is interference in the derived reception signal (9) and the holding signal is applied throughout the signal comparison period (6) in order to reliably prevent further switching caused by the level comparison process.

8. Scanning antenna diversity system according to claims 1 to 7, **characterised in that** the time interval (7) is varied as a function of the speed of travel so that its reciprocal value is set to be proportional to the speed of travel as a guide value.

9. Scanning antenna diversity system according to claim 8, **characterised in that** the time interval (7) is set as a function of the electrical tachometer signal (22) available in the vehicle.

10. Scanning antenna diversity system according to claims 1 to 9, **characterised in that** there is a reception signal level indicator (23) for detecting the average reception level and a stop circuit (24) and when a threshold level (25) is exceeded in areas of good reception the level comparison impulses (15) are stopped.

11. Scanning antenna diversity system according to claims 1 to 10, **characterised in that** an impulse counter (26) is provided for detecting the switching frequency of the diversity processor (4) and if the impulse frequency threshold (27) is exceeded the return of the further switching impulses (28) of the diversity processor (4) to the logical switching device (2) is prevented by means of a switch off device (29) and the switch off device (29) releases a setting signal (14) to the logical switching device (2) so that the maximum level switching position (Smax) is set.

12. Scanning antenna diversity system according to claims 1 to 11, **characterised in that** the logical switching device (2) is formed from a combination of a multipolar electronic advance switch (31) which advances by one switching position when an advance pulse (28) occurs at the output from the diversity processor (4), and a multipolar electronic changeover switch (32) the input connections of which are supplied with signals from antennas (A1, A2, A3,...), and the electronic changeover switch (30), initiated by the level comparison impulses (15), through the logic circuit (13), is actuated by the changeover signal (12) for the purpose of level comparison so that during the time intervals (7), of the switching positions (S1...S4) available, it assumes the maximum level switching position (Smax), and the associated maximum level signal is supplied to one of the input connections (P1 to P4) of the electronic advance switch (31) and discrete signals from the antennas (A1, A2, A3,...) are supplied to the other input connections (P1 to P4) of the electronic advance switch (31).

13. Scanning antenna diversity system according to claim 11, **characterised in that** the logical switching device (2) contains a multi-diode switch (32) and each signal from the antennas (A1, A2, A3,...) is switched through to the input of the receiver (3) by alternate activation of a diode and in order to control the transmission of the diodes a changeover logic (2b) and an advance switching logic (2a) are provided and stored in the advance switching logic (2a) is the address list of the signals (S1, S2, S3...) from the antennas (A1, A2, A3,...), supplemented by the address of the maximum level switching position (Smax) by controlling with the address signal (19), and when an advance switching impulse (28) occurs during a time interval (7) at the output from the diversity processor (4) the address list is moved on by another position by activation of the associated diode and the advance switching logic (2a) ensures that when the changeover signal (12) occurs none of the diodes in the multi-diode switch (32) is activated.

14. Scanning antenna diversity system according to claims 1 to 13, **characterised in that** in the level comparing device (8) a mute switching impulse (33) is formed which is fed to a mute circuit (34) preferably located in the lower frequency part of the receiver (3) and the mute switching impulse (33) is designed, in terms of its duration and the depth of scanning achieved with it, so that the mute switching takes place during the level comparison period (6), so that the level comparison operations are totally inaudible.

## Revendications

1. Système de diversité à balayage d'antennes pour véhicules, comprenant une installation à antennes multiples (1) comportant au moins deux antennes, qui comprend un dispositif de commutation logique pouvant être commandé (2), dans lequel, dans différentes positions de commutation, c'est à chaque fois un signal de réception (5) différent sous le rapport de la diversité qui est envoyé à un récepteur (3) et, avec un signal de réception (9) dérivé du signal de réception (5), ce dernier pilote un processeur de diversité (4) qui, en présence d'une perturbation de la réception, avance le dispositif de commutation logique (2) dans une autre position de commutation,

   **caractérisé en ce que**

   pendant des temps de comparaison de niveau (6) aussi courts que possible qui sont initiés répétitivement de façon cyclique, à chaque fois après écoulement d'un intervalle de temps (7) relativement long, convenablement choisi pour la variation dans le temps du niveau du signal de réception qui résulte du mouvement du véhicule, les niveaux du signal de réception dérivé (9) qui se présentent dans différentes positions de commutation (S1, S2...) du dispositif de commutation logique (2) contenues dans une série de telles positions qui sont à contrôler sont détectés avec comparaison dans un dispositif de comparaison de niveau (8), de telle sorte que la position de commutation de niveau maximum (Smax) correspondant au plus haut niveau de réception actuel est obtenu continuellement à la fin de chaque temps de comparaison de niveau (6) dans la situation de réception actuelle, et le temps de comparaison de niveau (6) est choisi suffisamment court pour ne pas détériorer la réception de façon perceptible et le processeur de diversité (4) est configuré de manière qu'aucun transfert à travers lui ne soit déclenché par l'opération de contrôle de niveau et que, dans la communication cyclique des signaux de réception (5) au récepteur (3) et le contrôle d'absence de perturbation, en supplément de positions de commutation discrètes (S1, S2...) du dispositif de commutation logique (2), la position de commutation de niveau maximum (Smax) correspondant au plus haut niveau de réception actuel soit aussi détectée à chaque instant lors de la communication cyclique des signaux de réception (5) au récepteur (3).

2. Système de diversité à balayage d'antennes selon la revendication 1,

   **caractérisé en ce que**

   l'intervalle de temps (7) est choisi suffisamment petit pour que le véhicule ne parcourt pas plus que la longueur de trajet Lambda/5 pendant un intervalle de temps (7) et le temps de comparaison de niveau (6) est choisi de préférence dans l'ordre de grandeur de la microseconde.

3. Système de diversité à balayage d'antennes selon la revendication 1 ou 2,

   **caractérisé en ce que**

   dans le cas où plus de deux positions de commutation (S1, S2, S3...) sont présentes dans le dispositif de commutation logique (2), pendant un temps de comparaison de niveau (6), la position qui est obtenue à chaque fois est celle de deux des positions de commutation possibles (S1, S2, S3...) qui fournit le plus haut niveau des deux signaux de réception (5) correspondants et, d'une façon analogue, pendant le temps de contrôle qui y fait suite, la position qui est obtenue est celle des positions de commutation (S1, S2, S3...) qui, dans une comparaison entre la position de commutation obtenue en dernier lieu et une autre des positions de commutation possibles (S1, S2, S3...), fournit le plus haut niveau de signal de réception (5), et, après la détection de toutes les positions de commutation possibles (S1, S2, S3...), après un nombre correspondant d'intervalles de temps (7) comportant des temps de comparaison de niveau (6), on obtient la position de commutation de niveau maximum actuelle (Smax).

4. Système de diversité à balayage d'antennes selon l'une des revendications 1 à 3,
    **caractérisé en ce que**
    dans le dispositif de comparaison de niveau (8), sont contenus un comparateur de niveau (10) à mesure très rapide et un circuit logique (13) destiné à détecter et à comparer les niveaux du signal de réception dérivé (9) qui sont présents l'un après l'autre dans le temps, et un émetteur d'intervalles de temps (11) à travail périodique qui, après l'écoulement de chaque intervalle de temps (7), déclenche dans le comparateur de niveau (10) pendant le temps de comparaison de niveau (6), au moyen du circuit logique (13), une opération de contrôle et de sélection de niveau de telle manière que l'état de commutation du dispositif de commutation logique (2) soit basculé dans une autre position de commutation dans les limites du temps de comparaison de niveau (6) par un signal de commutation (12) du circuit logique (13), et que, dans le circuit logique (13) après écoulement du temps de comparaison de niveau (6), la position de commutation de niveau maximum actuelle (Smax) soit enregistrée en tant que signal d'adresse (19) et que, dans le dispositif de commutation logique (2) pour le transfert cyclique lors de la reconnaissance d'une perturbation par le processeur de diversité (4), se trouve une liste d'adresses de positions de commutation (14) et l'adresse correspondant à la position de commutation de niveau maximum actuelle (Smax) est contenue sous la forme d'un signal d'adresse (19), de façon continuellement actualisée dans cette liste par transfert du circuit logique (13) dans le dispositif de commutation logique (2), de sorte que cette adresse est elle aussi saisie par la communication cyclique des signaux de réception (5) au récepteur (3).

5. Système de diversité à balayage d'antennes selon la revendication 4,
    **caractérisé en ce que**
    lors de l'initiation de la comparaison de niveau par l'impulsion de comparaison de niveau (15), par l'intermédiaire du circuit logique (13), le dispositif de commutation logique (2) est basculé dans la position de commutation de niveau maximum (Smax) présente en tant que signal logique lors de la comparaison de niveau précédente et, dans le comparateur de niveau (10) est contenu un organe de décision d'échantillonnage et de maintien (17) qui, sur un court temps d'échantillonnage (16), détecte le niveau de signal de réception dérivé (9) et maintient cette valeur de niveau, et après le basculement de la position de commutation du dispositif de commutation logique (2) dans une autre position de commutation, détecte, pendant un deuxième temps d'échantillonnage (16), le niveau correspondant du signal de réception dérivé (9), et transmet la décision sur le plus haut des deux niveaux détectés au circuit logique (13) sous la forme d'un signal binaire (18).

6. Système de diversité à balayage d'antennes selon la revendication 4,
    **caractérisé en ce que**
    dans le comparateur de niveau (10), est contenu un organe de décision d'échantillonnage et de maintien (17) qui maintient la valeur de niveau la plus haute issue de la dernière comparaison de niveau pendant l'intervalle de temps (7) et l'adresse correspondante de la position de commutation du dispositif de commutation logique (2) est mémorisée dans le circuit logique (13) et, lors de l'initiation de la comparaison de niveau par l'impulsion de comparaison de niveau (15), par l'intermédiaire du circuit logique (13), le dispositif de commutation logique (2) est basculé dans une autre position de commutation et l'organe de décision d'échantillonnage et de maintien (17) détecte pendant un temps d'échantillonnage (16), à l'aide d'un émetteur de temps d'échantillonnage (20), le niveau correspondant du signal de réception dérivé (9), et transmet la décision sur le plus grand des deux niveaux détectés au circuit logique (13) sous la forme d'un signal binaire (18) et l'adresse correspondante de la position de commutation du dispositif de commutation logique (2) est mémorisée à l'état actualisé dans le circuit logique (13).

7. Système de diversité à balayage d'antennes selon l'une des revendications 1 à 6,
    **caractérisé en ce que**
    le processeur de diversité (4) possède une entrée de maintien (21) qui, lors de la présence d'un signal de maintien, bloque le transfert du dispositif de commutation logique (2) en présence d'une perturbation dans le signal de réception dérivé (9) et, pour éviter avec sécurité un transfert provoqué par l'opération de comparaison de niveau, le signal de maintien est appliqué pendant le temps de comparaison de niveau (6).

**8.** Système de diversité à balayage d'antennes l'une des revendications 1 à 7,

    **caractérisé en ce que**

    l'intervalle de temps (7) est modifié en fonction de la vitesse de marche, et son inverse, proportionnel à la vitesse de marche, est réglé en tant que valeur de référence.

**9.** Système de diversité à balayage d'antennes selon l'une des revendications 1 à 8,

    **caractérisé en ce que**

    l'intervalle de temps (7) est réglé en fonction du signal du tachymètre électrique (22) présent dans le véhicule.

**10.** Système de diversité à balayage d'antennes selon l'une des revendications 1 à 9,

    **caractérisé en ce que**

    il est prévu un indicateur de niveau du signal de réception (23) destiné à déterminer le niveau du signal de réception obtenu, et un circuit d'arrêt (24) et, en cas de dépassement d'un niveau limite (25) dans des zones de réception bien alimentées, les impulsions de comparaison de niveau (15) sont suspendues.

**11.** Système de diversité à balayage d'antennes selon l'une des revendications 1 à 10,

    **caractérisé en ce que**

    un compteur d'impulsions (26) est prévu pour déterminer la fréquence de commutation du processeur de diversité (4) et, en cas de dépassement de la valeur limite (27) de la fréquence des impulsions, il interdit la transmission des impulsions de transfert (28) du processeur de diversité (4) au dispositif de commutation logique (2) au moyen d'un dispositif de déconnexion (29), et le dispositif de déconnexion (29) envoie un signal de réglage (14) au dispositif de commutation logique (2) de telle manière que la position de commutation de niveau maximum (Smax) soit réglée.

**12.** Système de diversité à balayage d'antennes selon l'une des revendications 1 à 11,

    **caractérisé en ce que**

    le dispositif de commutation logique (2) est formé de la combinaison d'un commutateur de transfert électronique multipolaire (31) qui, lors de l'apparition d'une impulsion de transfert (28) à la sortie du processeur de diversité (4), avance d'une position de commutation, et d'un commutateur électronique multipolaire (32) aux connexions d'entrée duquel sont acheminés des signaux issus des antennes (A1, A2, A3) et le commutateur électronique (30), initié par les impulsions de comparaison de niveau (15), est piloté par l'intermédiaire du circuit logique (13) pour l'exécution de la comparaison de niveau par l'intermédiaire du signal de commutation (12), de telle manière que, pendant les intervalles de temps (7), il reçoive, parmi les positions de commutation disponibles (S1....S4), la position de commutation de niveau maximum (Smax), et le signal de niveau correspondant est envoyé à une des connexions d'entrée (P1...P4) du commutateur de transfert électronique (31), et, aux autres connexions d'entrée (P1...P4) du commutateur de transfert électronique (31), sont acheminés des signaux discrets issus des antennes (A1, A2, A3,...)

**13.** Système de diversité à balayage d'antennes selon la revendication 11,

    **caractérisé en ce que**

    le dispositif de commutation logique (2) renferme un commutateur à diodes multiples (32) et chaque signal issu des antennes (A1, A2, A3,...) est transmis par une activation alternative d'une diode à l'entrée du récepteur (3) et, pour la commande de l'état passant des diodes, sont présents une logique de commutation (2b) et une logique de transfert (2a) et, dans la logique de transfert (2a), est enregistrée la liste des adresses des signaux (S1, S2, S3...) issus des antennes (A1, A2, A3,...), complétée de l'adresse de la position de commutation de niveau maximum (Smax) par la commande au moyen du signal d'adresse (19) et, lors de l'apparition d'une impulsion de transfert (28) pendant l'intervalle de temps (7) à la sortie du processeur de diversité (4), la liste d'adresses est avancée d'une position de plus par l'activation de la diode correspondante, et la logique de transfert (2a) a pour effet que, lors de l'apparition du signal de commutation (12), aucune des diodes contenues dans le commutateur à diodes multiples (32) n'est activée.

**14.** Système de diversité à balayage d'antennes selon l'une des revendications 1 à 13,

    **caractérisé en ce que**

    dans le dispositif de comparaison de niveau (8) est formée une impulsion de commutation silencieuse (33) qui est envoyée à un circuit silencieux (34) qui se trouve de préférence dans la partie de basse fréquence du récepteur (3), et l'impulsion de commutation muette (33) est configurée, en ce qui concerne sa durée et la profondeur de suppression obtenue avec cette impulsion, de telle manière que la commutation silencieuse se produise pendant le temps de comparaison de niveau (6), de sorte que les opérations de comparaison de niveau sont entièrement inaudibles.

Fig. 1

Relative Empfangssignalpegel in dB aus 2 Schaltstellungen und der jeweils größere
Empfangspegel über einer relativen Wegstrecke bezogen auf die Wellenlänge

relative Wegstrecke bezogen auf die Wellenlänge

Fig. 2

Fig. 3a

Fig. 3c

Fig. 3b

Fig. 3d

Fig. 4

Fig. 5

17

Fig. 6

Fig. 7